# EUROPÄISCHE PATENTSCHRIFT

(11) **EP 0 963 030 B1**
(45) Veröffentlichungstag und Bekanntmachung des Hinweises auf die Patenterteilung: **28.07.2004**
(21) Anmeldenummer: 99109914.4
(22) Anmeldetag: 20.05.1999
(51) Int. Cl.: H02K 15/04

(54) **Vorrichtung zum Wickeln von Spulen**
Apparatus for winding coils
Dispositif d'enroulement de bobines

(30) Priorität: 02.06.1998 DE 19824327
(43) Veröffentlichungstag der Anmeldung: 08.12.1999
(73) Patentinhaber: Rist, Otto, 88255 Baienfurt (DE)
(72) Erfinder: Rist, Otto, 88255 Baienfurt (DE)
(74) Vertreter: Patentanwälte Eisele, Otten & Roth

(56) Entgegenhaltungen:
- EP-A- 0 741 442
- US-A- 3 980 243
- PATENT ABSTRACTS OF JAPAN vol. 009, no. 106 (E-313), 10. Mai 1985 (1985-05-10) & JP 59 230451 A (MATSUSHITA DENKI SANGYO KK), 25. Dezember 1984 (1984-12-25)

## Beschreibung

Die Erfindung betrifft eine Vorrichtung zum Wickeln von Spulen bzw. Spulengruppen, insbesondere für Statoren von Elektromotoren, nach dem Oberbegriff des Anspruchs 1.

Spulen bzw. Spulengruppen für Statoren von Elektromotoren werden üblicherweise mittels eines sogenannten Flyers um Wickelschablonen herumgewickelt und anschließend in einem Einziehwerkzeug zum Einziehen der Spulen bzw. Spulengruppen in ein Statorblechpaket abgelegt. Ein solcher Flyer besteht in der Regel aus einem rotierenden Arm mit einer Drahtführung für den Spulendraht. Das Drahtende wird von einem separaten Drahthalter gehalten, so daß der Spulendraht beim Drehen des Flyers von einem Drahtvorrat abgezogen wird und durch die Drahtführung des Flyers während des Wickelns hindurchläuft.

Um eine Spule mit einem anderen Draht, beispielsweise mit anderem Drahtdurchmesser oder einem anderen Material gegenüber einer bereits gewickelten Spule anfertigen zu können, muß bei den bekannten Vorrichtungen der entsprechende Draht aus der Drahtzufuhr entfernt und ein neuer Draht eingezogen werden. Das Einziehen des Drahtes wird manuell durchgeführt und erfordert einen gewissen Zeitaufwand. Hierdurch kommt es zu Verzögerungen in der Fertigung und damit zu erhöhten Kosten.

Aus dem Stand der Technik gehen dazu die Zusammenfassung der japanischen Patentanmeldung JP 59 230 451 A, die US-A-3,980,243 und die EP-A-0 741 442 hervor.

Die Zusammenfassung der JP 59 230 451 A beschreibt eine Vorrichtung zum Bewickeln von Statoren, wobei dazu zwei Statorhälften gleichzeitig direkt bewickelt und anschließend zu einer Einheit zusammengefaltet werden.

Für den Fall, daß eine andere Drahtstärke für die Bewicklung gewünscht wird, muß der in den Flyern eingezogene Draht wieder herausgezogen und durch einen anderen ersetzt werden.

Die US 3,980,243 offenbart eine technische Lehre, bei der zwei Flyer direkt den Wickeldraht auf einen Rotor wickeln, wobei ebenfalls der Draht in den Flyern getauscht werden muß, sofern ein anderer Draht für eine Wicklung vorgesehen werden soll.

Bei der EP 0 741 442 A2 wird eine Vorrichtung beschrieben, bei der Rotoren automatisch bewickelt werden. Zur Drahtführung für den Betrieb mit zwei Flyern sind dieser Druckschrift keine Hinweise zu entnehmen.

Aufgabe der Erfindung ist es, eine Vorrichtung vorzuschlagen, bei der mittels zweier Flyer eine Wickelschablone bewickelt werden kann.

Diese Aufgabe wird ausgehend von einer Vorrichtung der einleitend genannten Art durch die kennzeichnenden Merkmale des Anspruchs 1 gelöst. Dementsprechend zeichnet sich eine erfindungsgemäße Vorrichtung dadurch aus, daß ein um die Wickelschablone drehbarer zweiter Flyer mit von der ersten Drahtzuführung separater, zweiter Drahtzuführung vorgesehen ist, wobei in der zweiten Drahtzuführung eine Wickelscheibe vorgesehen ist. Eine solche Wickelscheibe ermöglicht es, den zweiten Flyer in radialer Richtung bezogen auf die gemeinsame Drehachse beider Flyer außerhalb des ersten Flyers anzuordnen und dabei die zweite Drahtführung außerhalb der Drehachse und außerhalb der ersten Drahtführung anzuordnen.

In die Drahtführung des zweiten Flyers kann ein vom ersten Draht verschiedener Draht eingezogen sein. Somit kann mit Hilfe des zweiten Flyers jederzeit eine Spule mit einem zweiten, beispielsweise einen anderen Durchmesser und/oder ein anderes Material aufweisenden Draht gewickelt werden. Auch das gleichzeitige Wickeln von zwei Spulen mit beiden Flyern ist somit ohne weiteres denkbar. Diesbezüglich bietet die erfindungsgemäße Vorrichtung auch bei der Verwendung desselben Drahts für beide Flyer entsprechende Vorteile.

Durch die in den Unteransprüchen genannten Maßnahmen sind vorteilhafte Ausführungen und Weiterbildungen der Erfindung möglich.

So wird in einer vorteilhaften Ausführungsform der zweite Flyer um die gleiche geometrische Achse drehbar ausgebildet, wie der erste Flyer. Die gemeinsame Drehachse der beiden Flyer wird bevorzugt zentrisch zur Wickelschablone angeordnet, so daß beim Wickeln der Spulen jeweils ein Drahteinzug mit möglichst gleichmäßiger Geschwindigkeit erfolgt.

Die erste Drahtführung wird hierbei bevorzugt wenigstens teilweise auf der Drehachse der Flyer verlaufend angeordnet.

Der Draht wird im Bereich des ersten Flyers aus dieser Achse in radialer Richtung abgelenkt. Somit wird der Bereich, der für die Rotation des ersten Drahts in der ersten Drahtführung von anderen Maschinenkomponenten freigehalten werden muß, auf die unmittelbare Umgebung der Wickelschablone begrenzt.

Durch die Wickelscheibe, die in der zweiten Drahtführung angeordnet wird, ergibt sich somit der Vorteil, die zweite Drahtführung durchgehend außerhalb der Drehachse der beiden Flyer anzuordnen, so daß sich der Verlauf der beiden Drähte nicht kreuzen kann. Dabei können die Dreharme der beiden Flyer mit einem festen Radius ausgebildet werden, wobei der erste Flyer einen kleineren Radius aufweist.

Die genannte Wickelscheibe wird hierbei bevorzugt drehbar gelagert, so daß sie einem Zug des aufgewickeltem Drahts mit Hilfe einer Drehung folgen kann.

Beim Drehen des zweiten Flyers wird somit stets ein Vorratswickel auf die Wickelscheibe aufgebracht. Es gibt hierbei verschiedene Möglichkeiten zum Betrieb des zweiten Flyers bei der Wicklung von Spulen. So kann der Draht wie bei den üblichen Vorrichtungen bzw. bei dem ersten Flyer von einem separaten Drahthalter fixiert werden, während der zweite Flyer rotiert. Hierbei wird eine Spule auf der Wickelschablone gewickelt, während zugleich ein entsprechender Vorratswickel auf der Wickelscheibe in der zweiten Drahtführung angelegt wird.

Zum Abwickeln dieses Vorratswickels kann die Drehrichtung des zweiten Flyers umgestellt werden. Dies bedeutet, daß bei einer der folgenden Spulen der Draht zunächst von der Wickelscheibe abgewickelt wird. Die Umkehrung des Drehrichtung des zweiten Flyers sollte zu einem Zeitpunkt erfolgen, in dem die Aufnahmekapazität der Wickelscheibe nicht überschritten wird.

Eine weitere Möglichkeit zum Betrieb des zweiten Flyers besteht darin, vor dem Wickeln einer Spule einen Vorratswickel mit definierter Windungszahl auf der Wickelscheibe anzubringen. Dies kann dadurch erfolgen, daß ein Drahthalter am Dreharm des zweiten Flyers vorgesehen ist. Nachdem der Vorratswickel mit der vorgegebenen Länge auf die Wickelscheibe aufgebracht ist, kann anschließend die gewünschte Spule unter Umkehrung der Drehrichtung des zweiten Flyers in der üblichen Weise gewickelt werden, indem das Drahtende vom Drahthalter des zweiten Flyers an einen separaten Drahthalter übergeben wird und der Flyer wie gewohnt eine Spule auf die Wickelschablone wickelt.

Da die Wickelscheibe einen festen Umfang hat, die Wickelschablone zur Fertigung unterschiedlich großer Spulen jedoch unterschiedliche Spulenumfänge aufweisen kann, ist die Länge des Drahtes, die bei einer bestimmten Windungszahl um die Wickelscheibe gewickelt ist, nicht in jedem Fall identisch mit der Länge des Drahtes, die für die gleiche Windungszahl zum Wickeln einer Spule auf der Wickelschablone benötigt wird. Sofern der Umfang der Wickelscheibe kleiner als der der Wickelschablone ist, was einer größeren Windungszahl entspricht, wird dies durch eine gegenüber dem zweiten Flyer gegenläufig drehende Wickelscheibe ausgeglichen, so daß die benötigte Drahtmenge problemlos nachgeliefert wird.

Sofern der Umfang der Wickelscheibe jedoch größer ist als der Umfang der Wickelschablone bzw. der zu wickelnden Spule, so kann ein Längenausgleich dadurch bewirkt werden, daß die Wickelscheibe in gleicher Drehrichtung wie der Flyer gedreht wird, wobei die überschüssige Drahtmenge an die Drahtzuführung wieder abgegeben wird. Hierzu werden vorteilhafterweise entsprechende Mittel zum Einziehen des Drahtes entgegen der Zuführungsrichtung vorgesehen. Diese Mittel zum Einziehen können beispielsweise mit Hilfe von Ausgleichsrollen, um die der Draht schlangenförmig herumgelegt wird, bewirkt werden, wobei wenigstens eine dieser Rollen gegen eine Rückstellkraft beweglich ist.

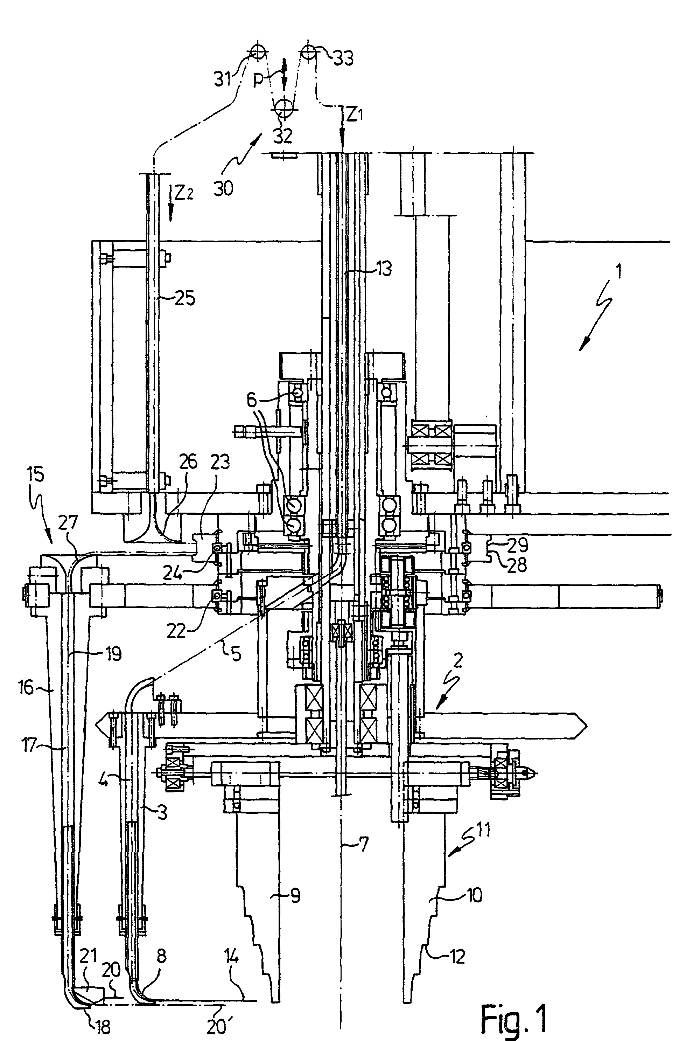

Ein Ausführungsbeispiel der Erfindung ist in der Zeichnung dargestellt und wird anhand der einzigen Figur nachfolgend näher erläutert.

Diese Figur zeigt
einen schematischen Querschnitt durch eine erfindungsgemäße Vorrichtung.

Die Vorrichtung 1 umfaßt einen ersten Flyer 2, dessen Dreharm 3 eine Drahtführung 4 eines ersten Drahtes 5 umfaßt. Der Dreharm 3 ist über Radiallager 6 drehbar um eine Drehachse 7 gelagert.

Die Drahtführung 4 ist am Auslaß 8 des Drahtes 5 zur Achse 7 hin umgebogen, so daß der Draht 5 zu einer aus zwei Teilen 9, 10 bestehenden Wickelschablone 11 hingeführt wird. Die Wickelschablone 11 weist unterschiedliche Stufen 12 zum Wickeln von Spulen mit unterschiedlichem Umfang auf.

Der Draht 5 ist oberhalb des ersten Flyers 2 in einer Axialführung 13 geführt, die auf der Drehachse 7 liegt.

Der erste Flyer 2 funktioniert in der bekannten Weise, d. h. das Drahtende 14 des Drahtes 5 wird in einem nicht näher dargestellten Drahthalter gehalten. Anschließend wird der Dreharm 3 in Drehung versetzt, so daß der Draht 5 um die Wickelschablone 11 gewickelt wird. Der Draht 5 wird hierbei von oben in Richtung des Pfeils Z₁ nachgezogen.

Ein zweiter Flyer 15 mit einem zweiten Dreharm 16 weist wiederum eine Drahtführung 17 auf, die am Auslaß 18 zur Achse 7 hin gebogen ist. Ein zweiter Draht 19 ist im Innern der Drahtführung 17 geführt und weist mit seinem Drahtende 20 zur Achse 7 und somit zur Wickelschablone 11 hin. Das Drahtende 20 ist in einem angedeuteten Drahthalter 21 am Dreharm 16 fixiert. Je nach Funktionsweise kann das Drahtende 20' anstelle des Drahthalters 21 auch durch einen nicht näher dargestellten separaten Drahthalter gehalten werden.

Der Dreharm 16 des zweiten Flyers 15 ist über Radiallager 22 ebenfalls um die geometrische Achse 7 drehbar gelagert.

Eine Wickelscheibe 23 ist davon unabhängig über ein Radiallager 24 ebenfalls um die geometrische Achse 7 drehbar gelagert.

Eine Drahtzufuhr 25 ist oberhalb der Wickelscheibe 23 angeordnet und mit einem zur Wickelscheibe 23 hin gewölbten Auslaß 26 versehen. Dementsprechend ist der Einlaß 27 der Drahtführung 17 des zweiten Flyers 15 ebenfalls zur Wickelscheibe 23 hin gebogen.

Die Wickelscheibe 23 weist eine Umfangsnut 28 auf, in deren Nutgrund ein Drahtvorratswickel 29 aufgewickelt ist.

Oberhalb der Drahtzufuhr 25 ist eine Spannvorrichtung 30, bestehend aus drei Ausgleichsrollen 31, 32, 33, angeordnet. Die Ausgleichsrolle 32 ist gegen eine Rückstellkraft verschiebbar, wie durch den Doppelpfeil P angedeutet.

Die Betriebsweise des zweiten Flyers findet folgendermaßen statt.

In einem ersten Betriebsmodus kann mit Hilfe des Flyers 15 ein Drahtvorratswickel 29 auf der Wickelscheibe 23 angelegt werden. Dies geschieht, indem das Drahtende 20 im Drahthalter 21 fixiert wird und der Dreharm 16 rotiert. Dabei wird der zweite Draht 19 in Richtung des Pfeils Z₂ durch die Drahtzufuhr 25 eingezogen.

Anschließend kann das Drahtende 20 vom Drahthalter 21 gelöst werden. Das nunmehr freie Drahtende 20' wird in einem nicht näher dargestellten separaten Drahthalter fixiert, worauf der Flyer 15 in entgegengesetzter Drehrichtung rotiert. Dabei wird eine Spule auf die Wickelschablone 11 aufgewickelt, während der Drahtvorratswickel 29 abgewickelt wird.

Im dargestellten Ausführungsbeispiel ist der Umfang der Wickelschablone 11 in allen Stufen 12 kleiner als der Umfang der Wickelscheibe 23. Daher fällt beim Drehen des Dreharms 16 während des Wickelns einer Spule um die Wickelschablone 11 eine überschüssige Drahtlänge an. Diese wird entgegen der Zufuhrrichtung Z₂ nach oben hin abgezogen, wodurch die Wickelscheibe 23 mit entsprechender, durch die Drahtspannung 25 vorgegebener Drehgeschwindigkeit dreht. Hierdurch findet der notwendige Längenausgleich des Drahtes 19 statt.

Im umgekehrten Fall, d. h. falls die Wickelschablone 11 einen größeren Umfang als die Wickelscheibe 23 aufweist, kann die Wickelscheibe 23 wiederum angetrieben durch den Einzug des Drahtes 19 in entgegengesetzter Richtung zum vorgenannten Fall, d. h. auch entgegengesetzt zum Flyer 16 drehen und somit zusätzlichen Draht nachliefern, der in Richtung des Pfeils Z₂ von oben eingezogen wird.

Der Drahtvorratswickel 29 kann in einem separaten Arbeitsvorgang, wie oben beschrieben, aber auch in einem zweiten Betriebsmodus zugleich mit dem Wickeln einer Spule auf der Wickelschablone 11 angelegt werden.

Der Rückzug des Drahtes 19 in entgegengesetzter Richtung zum Pfeil Z₂ wird bei Bedarf mit Hilfe der Spannvorrichtung 30 bewerkstelligt. Dementsprechend ist die Anzahl der Ausgleichsrollen 31, 32, 33 bzw. der Verstellweg von verschiebbaren Ausgleichsrollen 32 an die aufzunehmende Drahtlänge anzupassen. Vorliegend ist aus zeichnerischen Gründen die Spannvorrichtung 30 lediglich angedeutet.
- 1: Vorrichtung
- 2: erster Flyer
- 3: Dreharm
- 4: Drahtführung
- 5: erster Draht
- 6: Radiallager
- 7: Drehachse
- 8: Auslaß
- 9: Teil
- 10: Teil
- 11: Wickelschablone
- 12: Stufe
- 13: Axialführung
- 14: Drahtende
- 15: zweiter Flyer
- 16: Dreharm
- 17: Drahtführung
- 18: Auslaß
- 19: Draht
- 20: Drahtende
- 21: Drahthalter
- 22: Radiallager
- 23: Wickelscheibe
- 24: Radiallager
- 25: Drahtzufuhr
- 26: Auslaß
- 27: Einlaß
- 28: Umfangsnut
- 29: Drahtvorratswickel
- 30: Spannvorrichtung
- 31: Ausgleichsrolle
- 32: Ausgleichsrolle
- 33: Ausgleichsrolle

## Patentansprüche

1. Vorrichtung zum Wickeln von Spulen bzw. Spulengruppen, insbesondere für Statoren von Elektromotoren, mit einem ersten Flyer (2), der um eine Wickelschablone (11) drehbar angeordnet ist und eine erste Drahtzuführung (4) aufweist, wobei ein um die Wickelschablone drehbarer zweiter Flyer (15) mit von der ersten Drahtzuführung (4) separater, zweiter Drahtzuführung (17) vorgesehen ist, **dadurch gekennzeichnet, dass** in der zweiten Drahtzuführung (17) eine Wickelscheibe (23) vorgesehen ist.

2. Vorrichtung nach Anspruch 1 **dadurch gekennzeichnet, daß** der zweite Flyer (15) um die gleiche geometrische Drehachse (7) drehbar ist wie der erste Flyer (2).

3. Vorrichtung nach einem der vorgenannten Ansprüche **dadurch gekennzeichnet, daß** die Wickelscheibe (23) drehbar ist.

4. Vorrichtung nach einem der vorgenannten Ansprüche **dadurch gekennzeichnet, daß** die erste Drahtzuführung (4) wenigstens teilweise auf der geometrischen Drehachse (7) liegt.

5. Vorrichtung nach einem der vorgenannten Ansprüche **dadurch gekennzeichnet, daß** die zweite Drahtzuführung (17) radial außerhalb der ersten Drahtzuführung (4) angeordnet ist.

6. Vorrichtung nach einem der vorgenannten Ansprüche **dadurch gekennzeichnet, daß** Mittel (30) zum Einzug des Drahtes entgegen der Zuführungsrichtung Z₂ bei der zweiten Drahtzuführung vorgesehen sind.

7. Vorrichtung nach einem der vorgenannten Ansprüche **dadurch gekennzeichnet, daß** ein Drahthalter (21) am zweiten Flyer (15) vorgesehen ist.

8. Vorrichtung nach einem der vorgenannten Ansprüche **dadurch gekennzeichnet, daß** die Drehrichtung des zweiten Flyers (15) umkehrbar ist.

9. Verfahren zum Wickeln von Spulen bzw. Spulengruppen, insbesondere für Statoren von Elektromotoren, bei dem mit einem ersten Flyer (2), der um eine Wickelschablone (11) drehbar angeordnet ist und eine erste Drahtzuführung aufweist, ein erster Draht zugeführt wird, wobei mit einem um die Wickelschablone drehbaren zweiten Flyer (15) mit von der ersten Drahtzuführung (4) separater, zweiter Drahtzuführung (17) ein zweiter Draht zugeführt wird, **dadurch gekennzeichnet, dass** der zweite Draht in der zweiten Drahtführung (17) um eine Wickelscheibe (23) geführt wird.

10. Verfahren nach Anspruch 10 **dadurch gekennzeichnet, daß** ein Vorratswickel (29) auf der Wickelscheibe (23) während des Wickelns einer Spule um die Wickelschablone (11) angelegt wird.

11. Verfahren nach einem der Ansprüche 10 oder 11 **dadurch gekennzeichnet, daß** der Vorratswickel (29) mit im Drahthalter (21) des zweiten Flyers (15) fixiertem Drahtende (20) gewickelt wird.

12. Verfahren nach einem der Ansprüche 10 bis 12 **dadurch gekennzeichnet, daß** eine Spule bei gegenüber dem Aufwickeln eines Vorratswickels (29) auf der Wickelscheibe (23) umgekehrter Drehrichtung unter Abwicklung des Vorratswickels (29) von der Wickelscheibe auf der Wickelschablone (11) gewickelt wird.

## Claims

1. An apparatus for winding coils or coil groups, in particular for stators of electric motors, having a first flyer (2), which is disposed to rotate around a winding template (11) and comprises a first wire feed (4), wherein a second flyer (15) rotatable around the winding template is provided with a second wire feed (17) separate from the first wire feed (4),
**characterised in that** a winding disk (23) is provided in the second wire feed (17).

2. An apparatus according to Claim 1,
**characterised in that** the second flyer (15) is rotatable around the same geometric axis of rotation (7) as the first flyer (2).

3. An apparatus according to one of the above-mentioned Claims,
**characterised in that** the winding disk (23) is rotatable.

4. An apparatus according to one of the above-mentioned Claims,
**characterised in that** the first wire feed (4) lies at least partly on the geometric axis of rotation (7).

5. An apparatus according to one of the above-mentioned Claims,
**characterised in that** the second wire feed (17) is disposed radially outside the first wire feed (4).

6. An apparatus according to one of the above-mentioned Claims,
**characterised in that** means (30) for drawing in the wire in the direction opposite to the feed direction Z₂ are provided for the second wire feed.

7. An apparatus according to one of the above-mentioned Claims,
**characterised in that** a wire holder (21) is provided at the second flyer (15).

8. An apparatus according to one of the above-mentioned Claims,
**characterised in that** the direction of rotation of the second flyer (15) is reversible.

9. A method for winding coils or coil groups, in particular for stators of electric motors, in which with a first flyer (2), which is disposed to rotate around a winding template (11) and comprises a first wire feed, a first wire is supplied, whereby with a second flyer (15), rotatable around the winding template and having a second wire feed (17) separate from the first wire feed (4), a second wire is supplied,
**characterised in that** the second wire is guided in the second wire guide (17) around a winding disk (23).

10. A method according to Claim 10,
**characterised in that** a supply winding (29) is placed on the winding disk (23) during the winding of a coil around the winding template (11).

11. A method according to one of Claims 10 or 11,
**characterised in that** the supply winding (29) is wound with the wire end (20) fixed in the wire holder (21) of the second flyer (15).

12. A method according to one of Claims 10 to 12,
**characterised in that** a coil is wound on the winding template (11) with the opposite direction of rotation in comparison with the winding of a supply winding (29) on the winding disk (23) by unwinding the supply winding (29) from the winding disk.

## Revendications

1. Dispositif d'enroulement de bobines ou de groupes de bobines, destinées notamment à des stators de moteurs électriques, avec un premier flasque à broche (2) qui est monté en rotation autour d'un gabarit d'enroulement (11) et comporte une première amenée de fil (4), dispositif dans lequel est prévu un deuxième flasque à broche (15) pouvant tourner autour du gabarit d'enroulement et comportant une deuxième amenée de fil (17) qui est séparée de la première amenée de fil (4),
**caractérisé en ce qu'**un disque d'enroulement (23) est prévu dans la deuxième amenée de fil (17).

2. Dispositif selon la revendication 1,
**caractérisé en ce que** le deuxième flasque à broche (15) peut tourner autour du même axe de rotation géométrique (7) que le premier flasque à broche (2).

3. Dispositif selon l'une des revendications précédentes,
**caractérisé en ce que** le disque d'enroulement (23) est rotatif.

4. Dispositif selon l'une quelconque des revendications précédentes,
**caractérisé en ce que** la première amenée de fil (4) est située, au moins partiellement, sur l'axe de rotation géométrique (7).

5. Dispositif selon l'une quelconque des revendications précédentes,
**caractérisé en ce que** la deuxième amenée de fil (17) est agencée radialement à l'extérieur de la première amenée de fil (4).

6. Dispositif selon l'une quelconque des revendications précédentes,
**caractérisé en ce que**, dans la deuxième amenée de fil, des moyens (30) sont prévus pour le rentrage du fil en sens opposé au sens d'amenée Z₂.

7. Dispositif selon l'une quelconque des revendications précédentes,
**caractérisé en ce qu'**un dispositif de retenue de fil (21) est prévu sur le deuxième flasque à broche (1-5).

8. Dispositif selon l'une quelconque des revendications précédentes,
**caractérisé en ce que** le sens de rotation du deuxième flasque à broche (15) est réversible.

9. Procédé d'enroulement de bobines ou de groupes de bobines, destinées notamment à des stators de moteurs électriques, dans lequel un premier fil est amené par un premier flasque à broche (2) qui est monté rotatif autour d'un gabarit d'enroulement (11) et qui comporte une première amenée de fil, un deuxième fil étant amené par un deuxième flasque à broche (15) pouvant tourner autour du gabarit d'enroulement et comportant une deuxième amenée de fil (17) qui est séparée de la première amenée de fil (4),
**caractérisé en ce que** le deuxième fil est guidé dans la deuxième amenée de fil (17) autour d'un disque d'enroulement (23).

10. Procédé selon la revendication 9,
**caractérisé en ce qu'**une bobine de réserve (29) est placée sur le disque d'enroulement (23) pendant l'enroulement d'une bobine autour du gabarit d'enroulement (11).

11. Procédé selon l'une des revendications 10 ou 11,
**caractérisé en ce que** la bobine de réserve (29) est enroulée avec l'extrémité de fil (20) fixée dans le dispositif de retenue de fil (21) du deuxième flasque à broche (15).

12. Procédé selon l'une quelconque des revendications 10 à 12,
**caractérisé en ce que**, par rapport à l'enroulement d'une bobine de réserve (29) sur le disque d'enroulement (23), une bobine est enroulée sur le gabarit d'enroulement (11) dans le sens de rotation inverse par déroulement de la bobine de réserve (29) du disque d'enroulement.
